(19) Europäisches Patentamt
European Patent Office
Office européen des brevets

(11) **EP 3 453 995 B1**

(12) **EUROPEAN PATENT SPECIFICATION**

(45) Date of publication and mention
of the grant of the patent:
**19.02.2020 Bulletin 2020/08**

(51) Int Cl.:
***F26B 17/16*** *(2006.01)*    ***F26B 23/10*** *(2006.01)*
***F26B 25/02*** *(2006.01)*    ***A23B 9/08*** *(2006.01)*

(21) Application number: **17823484.5**

(22) Date of filing: **02.06.2017**

(86) International application number:
**PCT/CN2017/086989**

(87) International publication number:
**WO 2018/006672 (11.01.2018 Gazette 2018/02)**

(54) **NEGATIVE-PRESSURE CONTINUOUS GRAIN DRYER WITH BUILT-IN HEATING DEVICE**

KONTINUIERLICHER UNTERDRUCK-KORNTROCKNER MIT INTEGRIERTER HEIZVORRICHTUNG

SÉCHOIR À GRAINS EN CONTINU À DÉPRESSION AVEC DISPOSITIF DE CHAUFFAGE INCORPORÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.07.2016 CN 201610521316**

(43) Date of publication of application:
**13.03.2019 Bulletin 2019/11**

(73) Proprietor: **The Institute of Food Science and Technology,**
**Jiangxi Academy of Agricultural Sciences**
**Qingyunpu District**
**Nanchang**
**Jiangxi 330200 (CN)**

(72) Inventors:
- **MA, Yanbo**
  **Nanchang**
  **Jiangxi 330200 (CN)**
- **ZHOU, Jinying**
  **Nanchang**
  **Jiangxi 330200 (CN)**
- **FENG, Jianxiong**
  **Nanchang**
  **Jiangxi 330200 (CN)**
- **ZHU, Xuejing**
  **Nanchang**
  **Jiangxi 330200 (CN)**
- **HE, Jialin**
  **Nanchang**
  **Jiangxi 330200 (CN)**
- **CHEN, Guipeng**
  **Nanchang**
  **Jiangxi 330200 (CN)**
- **XIONG, Wenhua**
  **Nanchang**
  **Jiangxi 330200 (CN)**

(74) Representative: **Lavoix**
**Bayerstrasse 83**
**80335 München (DE)**

(56) References cited:
| | |
|---|---|
| CN-A- 1 216 821 | CN-A- 103 115 484 |
| CN-A- 106 123 548 | CN-U- 202 371 977 |
| CN-U- 203 629 247 | CN-U- 203 675 993 |
| CN-U- 205 878 847 | CN-U- 206 005 749 |
| GB-A- 500 734 | US-A- 3 640 206 |
| US-A- 4 486 960 | |

**Description**

**TECHNICAL FIELD**

The present invention relates to a grain dryer, and in particular to a negative-pressure continuous grain dryer with a built-in heating device.

**BACKGROUND**

There are mainly three grain drying methods in domestic. The first method is performed by, manual sun-drying. Although the method does not consume energy, the labor cost and the intensity are high and this method is also restricted by sun-drying field and climate conditions; the second method is performed by ventilation and drying using a ground groove. Although the method consumes low energy, the processing capacity is large, and the drying is not uniform as it is limited by moisture of the grain when being put into storage; the third method is performed by drying using a drying machine. Although the method has high drying efficiency and short drying time without limitation of the grain moisture when being put into storage, the energy consumption is relatively high, the quality is reduced due to the fact that the grain is forced maturity because of rapid drying, and it is easy to generate crackle or break. A negative-pressure continuous grain dryer with a built-in heating device is used for drying grains, which does not restricted by sun-drying field, climate conditions and grain moisture when the grains are put into storage, and has the following characteristics:1, higher yield of a single machine and a lower production cost; 2. continuous feeding and continuous drying of the grains achieved; 3. good quality of dry grains with lower crackle or break; 4. grain "condensation" avoided during drying when drying is conducted under negative-pressure; 5. double-drying achieved; 6. simple-structure and ease of maintenance for the dryer.

**SUMMARY**

The present application provides a negative-pressure continuous grain dryer with a built-in heating device, wherein the grain is continuously subjected to "stage" drying so as to enable the grains to achieve "uniform" drying by uniformly distributing a heating device in a bin, according to a drying principle of high-humidity to high-temperature and low-humidity to low-temperature.

The present application is achieved by a negative-pressure continuous grain dryer with a built-in heating device, comprising a dryer bin, a heating device, and a centrifugal fan, wherein a plurality of levels of the heating devices are disposed from top to bottom in the dryer bin, a grain mixing device is provided below the heating device at each level, an auxiliary heating device and a natural air inlet are provided outside the bin and in correspondence with the heating device at each level, the auxiliary heating devices and the natural air inlets are in communication with the grains and the heating devices in the dryer bin through a perforated baffle plate, the centrifugal fan is in communication with each of moisture exhaust vents at each level through an air duct.

The application has the following technical effects:

1. grains in the bin of the dryer slowly pass through a heating layer and a non-heating layer from top to bottom under the action of the gravity, which naturally forms the process: drying→tempering→drying→tempering......drying, and realizes a "separated-process" drying of grains;

2. a "sectional" drying of the grains is realized by setting or adjusting medium temperature of the heating device by virtue of different moisture sections of each layer of grains in dryer bin according to the drying principle of "high-humidity to high-temperature" and "low-humidity to low-temperature";

3. the heating devices are uniformly distributed in dryer bin, so that the ventilation path is short, the power consumption is low, and the grains are treated by basically uniform heat conduction (radiation and convection) after the grains pass through the heating layer, and there is a small temperature difference between the inner layer and the outer layer in dryer bin (generally about 3-5 °C), thus achieving a balanced drying for the grains;

4.the non-heated layer in dryer bin is equipped with a grain mixing device to cross-mix the grains at different temperatures, and realize "heat conduction and heat radiation between each other to achieve "uniform" drying of the grains;

5. the dryer uses the electromagnetic vibrating feeder to continuously discharge, and controls the moisture content of the grains after drying (a level of moisture should be set according to the drying requirements) by adjusting the discharge amount of the feeder, so as to avoid crackle and break due to several times of lifting and realizing "continuous" drying of the grains;

6. the heat source carrier of the heating device is relatively wide: liquid such as hot water and heat conduction oil, gas such as hot air, heat source bodies such as electric furnace wire, electric heating tube, and a carbon crystal electric heating plate.

## BRIEF DESCRIPTION OF THE DRAWINGS

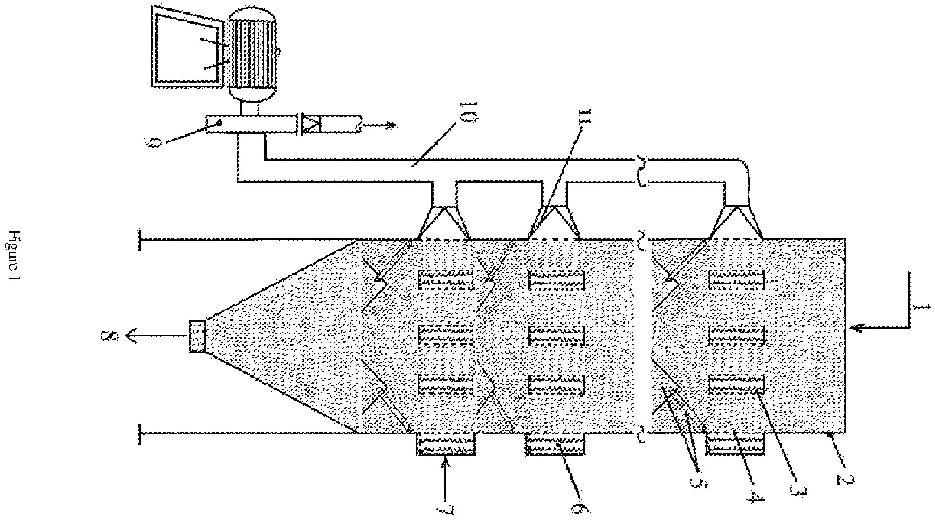

FIG. 1 is a schematic diagram of a structure of the present application.

Demonstration for reference numerals: 1- grain inlet, 2- dryer bin, 3- heating device, 4-perforated baffle plate, 5- grain mixing device, 6- auxiliary heating device, 7- natural air inlet, 8- grain outlet, 9- centrifugal fan, 10- air duct, 11- moisture exhaust vent.

## DETAILED DESCRIPTION

The present application is achieved by a negative-pressure continuous grain dryer with a built-in heating device, comprising a dryer bin 2, a heating device 3, and a centrifugal fan 9, wherein a plurality of levels of the heating devices 3 are disposed from top to bottom in the dryer bin 2, a grain mixing device 5 is provided below the heating device 3 at each level, an auxiliary heating device 6 and a natural air inlet 7 are provided outside the bin 2 and in correspondence with the heating device 3 at each level, the auxiliary heating device 6 and the natural air inlet 7 communicate with the grains and the respective heating device 3 in the dryer bin 2 through a perforated baffle plate 4, the centrifugal fan 9 communicates with each of moisture exhaust vents 11 at each level through an air duct 10, the moist gains enter into the dryer bin 2 through grain inlet 1, undergo "stage" drying, and discharge from a grain outlet 8.

Embodiment: a negative-pressure continuous grain dryer with a built-in five-layer heating device for drying 20 tons of grains (wet basis, similarly hereinafter) each day, is used for drying late long-grain rice in the southern part of the country by adopting a heat source of a coal-fired hot water boiler. The late long-grain rice right after being harvested from the field has a moisture content of 31.5%, while if undergoing a first-time drying, moisture of late long-grain rice after drying is $\leq$ 14.5% under the national specified storage standard; if undergoing a second-time drying, the rice is temporarily stored for no longer than48 hours, and the moisture is should be controlled within 17.5% .

The first time drying is performed by the following steps:

1. Late long-grain rice is cleaned, right after being harvested from the field, by removing impurities such as silt and shriveled rice, and lifted to the dryer bin by a bucket elevator.

2. The moisture section of dried grain is set, wherein, the grains with moisture content from 14.5% to 31.5% is divided into the five sections, i.e., , 14.5%-15.5% for partial-high moisture section; 15.5%-17.5% for relative-high moisture section; 17.5%-20.5% for high moisture section; 20.5%-24.5% for ultra-high moisture section , 24.5% -31.5% for extra-high moisture section.

3. the temperature of hot water in each layer of heating device in the dryer is set, wherein, the rice is divided into five sections according to the principle of high-humidity for high-temperature and low-humidity for low-temperature, i.e. the temperature of the hot water introduced into each layer of heating device of the dryer is preset and controlled as follows: top layer is at 90 °C; the second layer is at 80 °C; the third layer is at 70 °C; the fourth layer is 60 °C; the bottom layer is at 50 °C.

4. a hot water boiler is started, and a hot water pump is started when the temperature of the hot water reaches 90 °C, and the hot water is sent to a built-in heating device in the dryer bin including the auxiliary heating device outside the dryer bin.

5. The electromagnetic vibrating feeder is started, and the rice is uniformly discharged from an outlet of the dryer at a flow rate of 14 kg/min, at the moment, the grain does not meet the drying requirement, and the grain is re-lifted to the dryer bin by the bucket elevator. The rice flow is adjusted to ensure that the rice at the top layer of the dryer reaches the outlet or the moisture of the rice reaches 14.5% within 24 hours, and then the rice can be packaged and put into storage.

Finally, the temperature of hot water of each layer of heating devices in the dryer is adjusted according to the moisture requirements of rice after drying, a yield of the dryer can be increased as much as possible (the yield of the dryer is expected to reach 20 tons/24 hours or more) on the premise that the drying quality of the rice is ensured and the moisture of the rice is controlled to be 14.5%.

1. Production cost accounting: coal consumption cost (0.5 ton $\times$600 RMB/ton) = 300 RMB; power consumption cost (25 kw $\times$ 24 hours $\times$0.8 RMB /degree)) = 480 RMB; labor cost (2 persons $\times$200 RMB/person) = 400 RMB.

$$\text{Total cost} = 300 \text{ RMB} + 480 \text{ RMB} + 400 \text{ RMB} = 1180 \text{ RMB}$$

$$\text{Production cost} = 1180 \text{ RMB} \div 20 \text{ tons} = 59 \text{ RMB/ton.}$$

The second time drying is performed by the following steps:

1. Late long-grain rice is cleaned right after being harvested from the field, by removing impurities such as silt and shriveled rice , and lifted to the dryer bin by a bucket elevator.

2. the moisture section of dried grain is set, wherein, the grains with moisture content from 17.5% to 31.5% is divided into the five sections, i.e. 17.5%-18.5% for partial-high moisture section; 18.5%-20% for relative-high moisture section; 20-22% for high moisture section; 22%-25% for ultra-high moisture section , 25% -31.5% for extra-high moisture section.

3. the temperature of hot water in each layer of heating device in the dryer is set, wherein, the rice is divided into five sections according to the principle of high-humidity for high-temperature and low-humidity for low-temperature, i.e. the temperature of the hot water introducing into each layer of heating device of the dryer is preset and controlled as follows: top layer is at 90 °C; the second layer is at 85 °C; the third layer is at 80 °C; the fourth layer is at 75 °C; the bottom layer is at 70 °C.

4. a hot water boiler is started, and a hot water pump is started when the temperature of the hot water reaches 90 °C, and the hot water is sent to a built-in heating device in the dryer bin including the auxiliary heating device outside the dryer bin.

5. The electromagnetic vibrating feeder is started, and the rice is uniformly discharged from an outlet of the dryer at a flow rate of 42 kg/min, at the moment, the grain does not meet the drying requirement, and the grain is re-lifted to the dryer bin by the bucket elevator. The rice flow is adjusted to ensure that the rice at the top layer of the dryer reaches the outlet or the moisture of the rice reaches 17.5% within 24 hours, and then the rice can be packaged and put in storage.

Finally, the temperature of hot water of each layer of heating devices in the dryer is adjusted according to the moisture requirements of rice after drying, a yield of the dryer can be increased as much as possible (the yield of the dryer is expected to reach 60 tons/24 hours or more) on the premise that the drying quality of the rice is ensured and the moisture of the rice is controlled to be 17.5%.

1. Production cost accounting: production scale is calculated by 60 tons/24h, coal consumption cost (1.2 ton $\times$ 600 RMB/ton) = 720 RMB; power consumption cost (25 kw $\times$ 24 hours $\times$ 0.8 RMB /degree)) = 480 RMB; labor cost (2 persons $\times$ 200 RMB/person) = 400 RMB.

$$\text{Total cost} = 720 \text{ RMB} + 480 \text{ RMB} + 400 \text{ RMB} = 1600 \text{ RMB}$$

$$\text{Production cost} = 1600 \text{ RMB} \div 60 \text{ tons} = 26.7 \text{ RMB/ton.}$$

**Claims**

1.  A negative-pressure continuous grain dryer with a built-in heating device, comprising

    a dryer bin (2), a heating device (3), and
    a centrifugal fan (9),
    wherein a plurality of levels of the heating devices are disposed from top to bottom in the dryer bin, a grain mixing device (5) is provided below the heating device at each level,
    an auxiliary heating device (6) and a natural air inlet (7) are provided outside the bin and in correspondence with the heating device at each level, the heating devices (3) being uniformly distributed in the dryer bin, the auxiliary heating devices and the natural air inlets are in communication with the grains and the heating devices in the dryer bin through a perforated baffle plate (4), the centrifugal fan is in communication with each of moisture exhaust vents (11) at each level through an air duct (10).

**Patentansprüche**

1. Kontinuierlicher Unterdruck-Korntrockner mit integrierter Heizvorrichtung, umfassend

einen Trocknerbehälter (2),
eine Heizvorrichtung (3), und
ein Zentifugalgebläse (9);
wobei eine Vielzahl von Ebenen der Heizvorrichtungen von oben nach unten im Trocknerbehälter angeordnet sind,
eine Kornmischvorrichtung (5) unter der Heizvorrichtung auf jeder Ebene bereitgestellt ist,
eine Hilfs-Heizvorrichtung (6) und ein natürlicher Lufteinlass (7) außerhalb des Behälters und in Verbindung mit der Heizvorrichtung auf jeder Ebene bereitgestellt sind, wobei die Heizvorrichtungen (3) gleichförmig im Trocknerbehälter verteilt sind, die Hilfs-Heizvorrichtungen und die natürlichen Lufteinlässe in Kommunikation mit den Körnern und den Heizvorrichtungen im Trocknerbehälter durch eine perforierte Leitblechplatte (4) sind, das Zentifugalgebläse in Kommunikation mit jedem der Feuchtigkeits-Auslassventile (11) auf jeder Ebene durch einen Luftkanal (10) sind.

**Revendications**

1. Séchoir à grains en continu à dépression avec un dispositif de chauffage intégré, comprenant :

un conteneur de séchoir (2),
un dispositif de chauffage (3), et
un ventilateur centrifuge (9),
dans lequel une pluralité de niveaux de dispositifs de chauffage sont disposés de haut en bas dans le conteneur de séchoir, un dispositif de mélange de grains (5) est prévu au-dessous du dispositif de chauffage à chaque niveau,
un dispositif de chauffage auxiliaire (6) et une entrée d'air naturel (7) sont prévus à l'extérieur du conteneur et en correspondance avec le dispositif de chauffage à chaque niveau, les dispositifs de chauffage (3) étant répartis uniformément dans le conteneur de séchoir,
les dispositifs de chauffage auxiliaires et les entrées d'air naturel sont en communication avec les grains et les dispositifs de chauffage dans le conteneur de séchoir par le biais d'une plaque de déflecteur perforée (4), le ventilateur centrifuge est en communication avec chacun des évents d'évacuation d'humidité (11) à chaque niveau par le biais d'un conduit d'air (10).

Figure 1